# EUROPEAN PATENT APPLICATION

(11) **EP 4 723 286 A1**
(43) Date of publication of application: **08.04.2026**
(21) Application number: 23952113.1
(22) Date of filing: 20.12.2023
(51) Int. Cl.: H01M 10/0583, H01M 10/052

(54) **ELECTRODE SHEET FOLDING CONTROL METHOD AND APPARATUS, AND ELECTRODE SHEET FOLDING APPARATUS, AND BATTERY PRODUCTION SYSTEM**

(30) Priority: 12.09.2023 CN 202311168982
(71) Applicant: Contemporary Amperex Technology Co., Limited, Ningde, Fujian 352100 (CN)
(72) Inventor: WU, Kai, Ningde, Fujian 352100 (CN); PAN, Youcheng, Ningde, Fujian 352100 (CN); CUI, Renhao, Ningde, Fujian 352100 (CN); OU, Fuming, Ningde, Fujian 352100 (CN); WU, Bingzhao, Ningde, Fujian 352100 (CN); JIANG, Liang, Ningde, Fujian 352100 (CN); LIN, Jiang, Ningde, Fujian 352100 (CN)
(74) Representative: Gong, Jinping
(86) International application number: PCT/CN2023/140235
(87) International publication number: WO 2025/055191

(57) **Abstract**

The present application relates to an electrode sheet folding control method and apparatus, and an electrode sheet folding apparatus, and a battery production system. During the process of folding an electrode sheet group, a conveying component is controlled to work, so as to drive the electrode sheet group to move towards a folding platform. When a lamination region on the folding table begins to be folded or has been folded, at least one of the conveying component and the folding table is controlled to translate transversely in a preset direction, such that the distance of a connecting line between a conveying end of the conveying component and a folding starting point of the lamination region on the folding table is increased. In this way, a clearance space can be provided for the folding of the lamination region, thereby facilitating stress release of the lamination region during folding, such that a pulling force of the lamination region that is being in a folded state on an unfolded lamination region is reduced, and the degree of bending and warping of the lamination region at a folding position is reduced. In this case, the probability of a gap anomaly being generated at a folding position of a formed laminated structure is reduced, such that the probability of a lithium plating phenomenon occurring in an electrode sheet at the folding position is effectively reduced, thereby improving the quality of a laminated battery.

## Description

### CROSS-REFERENCE

The present application refers to the Chinese Patent Application No. 2023111689820 entitled "ELECTRODE PLATE FOLDING CONTROL METHOD AND APPARATUS, ELECTRODE PLATE FOLDING APPARATUS, AND BATTERY PRODUCTION SYSTEM" filed on September 12, 2023, which is incorporated herein by reference in its entirety.

### TECHNICAL FIELD

The present application relates to the technical field of battery production, and in particular, to an electrode plate folding control method and apparatus, an electrode plate folding apparatus, and a battery production system.

### BACKGROUND

An electrode assembly is a component that undergoes an electrochemical reaction in a battery, and is mainly formed by winding or stacking a positive electrode plate and a negative electrode plate. A separator is usually disposed between the negative electrode plate and the positive electrode plate. During the stacking process, the stacked negative electrode plate, separator, and positive electrode plate can be folded. However, due to the defects of the traditional folding mode of the electrode plates, lithium plating easily occurs at the folding position of the electrode plates, which affects the quality of the stacked battery.

### SUMMARY

Based on this, it is necessary to provide an electrode plate folding control method and apparatus, an electrode plate folding apparatus, and a battery production system, to reduce the probability of lithium plating at the folding position of the electrode plates and improve the quality of a stacked battery.

According to a first aspect, the present application provides an electrode plate folding control method, an electrode plate folding mechanism including a stacking platform and a conveying component configured to convey an electrode plate group, where the electrode plate group is provided with a plurality of stacking areas in a length direction thereof; and the electrode plate folding control method includes the following steps: controlling the conveying component to drive the electrode plate group to be conveyed towards the stacking platform; and controlling, in response to the stacking areas being folded on the stacking platform, the conveying component and/or the stacking platform to move in a preset direction, such that a distance of a connecting line between a conveying end of the conveying component that acts on the electrode plate group and a folding start point of the stacking area on the stacking platform increases, where the preset direction intersects with a direction in which the conveying component is spaced from the stacking platform.

According to the above electrode plate folding control method, in the process of folding the electrode plate group, the conveying component is controlled to operate to drive the electrode plate group to move towards the stacking platform. When the stacking area begins to be folded or has been folded on the stacking platform, at least one of the conveying component and the stacking platform is controlled to translate transversely in the preset direction, such that the distance of the connecting line between the conveying end of the conveying component and the folding start point of the stacking area on the stacking platform increases. In this way, a clearance space can be provided for folding of the stacking areas, thereby facilitating stress relief of the stacking areas during folding, reducing the pulling force of a stacking area in a folded state on a non-folded stacking area, and reducing the degree of bending and warping of the stacking area at the folding position. In this case, the probability of a gap anomaly being generated at a folding position of a formed stacked structure is reduced, such that the probability of lithium plating occurring in an electrode plate at the folding position is effectively reduced, thereby improving the quality of a stacked battery.

In some embodiments, the step of controlling the conveying component and/or the stacking platform to move in the preset direction includes: controlling the conveying component and/or the stacking platform to continuously and periodically execute a translational strategy in the preset direction, where the translational strategy includes reciprocating on one side of an initial position of the conveying component or the stacking platform along the preset direction, and reciprocating on the other side of the initial position along the preset direction. In this design, in the process of folding the electrode plate group, at least one of the conveying component and the stacking platform is controlled to periodically execute the translational strategy, to provide effective clearance space for the folding process of the stacking areas, which facilitates stress relief of the stacking areas, reduces the degree of bending and warping of the stacking areas, and improves the quality of the stacked battery.

In some embodiments, the step of executing the translational strategy includes: controlling the stacking platform to reciprocate on a second side of the initial position in a case that the stacking area is folded along a first side facing the initial position; and controlling, in a case that the stacking area is folded along the second side, the stacking platform to reciprocate on the first side, where the first side and the second side are separately two opposite sides of the initial position along the preset direction. As such, the side of the stacking platform that reciprocates is disposed opposite to the folding direction of the stacking area, such that the distance of the connecting line between the conveying end of the conveying component and the folding start point of the stacking area can increase, and the space between the conveying component and the stacking platform increases, which facilitates stress relief, reduces the bending and warping at the folding position, and improves the quality of the stacked battery.

In some embodiments, the step of executing the translational strategy includes: controlling, in a case that the stacking area is folded along a first side facing the initial position, the conveying component to reciprocate on the first side; and controlling, in a case that the stacking area is folded along a second side facing the initial position, the conveying component to reciprocate on the second side, where the first side and the second side are separately two opposite sides of the initial position along the preset direction. As such, the side of the conveying component that reciprocates is disposed in the same direction as the folding direction of the stacking area, such that the distance of the connecting line between the conveying end of the conveying component and the folding start point of the stacking area can increase, and the space between the conveying component and the stacking platform increase, which facilitates stress relief, reduces the bending and warping at the folding position, and improves the quality of the stacked battery.

In some embodiments, positions through which the conveying component or the stacking platform reciprocates on either side of the initial position include the initial position and an extreme position, and the extreme position is spaced from the initial position in the preset direction. In this way, the translational path of the conveying component or the stacking platform is disposed between the initial position and the extreme position, such that the reciprocating movement of the conveying component or the stacking platform can be associated with the folding action of the stacking areas, and the effective control of the folding process of the electrode plate group is enhanced.

In some embodiments, a distance between the extreme position and the initial position is denoted as a first displacement, and a ratio of the first displacement to a length of the stacking area is denoted as η, where in a case that one of the conveying component and the stacking platform is controlled to execute the translational strategy, 0 < η ≤ 0.7. In this way, the ratio of the first displacement to the length of the stacking area is controlled to be 0 to 0.7, which facilitates stress relief of the electrode plate group in the folding process and improves the quality of the stacked battery; and meanwhile, this also facilitates the improvement of the folding efficiency of the electrode plate group.

In some embodiments, η further satisfies the following condition: 0.4 ≤ η ≤ 0.5. In this way, the value of the ratio of the first displacement to the length of the stacking area is further controlled to be 0.4 to 0.5, such that the folding process of the electrode plate group can be controlled more accurately, and both the folding effect and the folding efficiency of the electrode plate group can be effectively considered.

In some embodiments, in a case that the conveying component and/or the stacking platform moves from the initial position to the extreme position, a displacement amount of the conveying end of the conveying component conveying the electrode plate group is controlled to be a second displacement, and a ratio of the second displacement to the length of the stacking area is denoted as γ, where 0.3 ≤ γ ≤ 0.7. In this way, the ratio of the second displacement to the length of the stacking area is controlled to be 0.3 to 0.7, such that at least 30% of the stacking areas in the electrode plate group are conveyed when the conveying component or the stacking platform completes the first step of the translational strategy. This helps reduce the bending and warping of the electrode plate group at the folding position, thereby improving the quality of the stacked battery.

In some embodiments, γ further satisfies the following condition: 0.3 ≤ γ ≤ 0.4. In this way, the ratio of the second displacement to the length of the stacking area is further controlled to be 0.3 to 0.4, which is beneficial to further effectively controlling the folding process of the electrode plate group, thereby making the quality of the stacked battery better controllable.

In some embodiments, the step of executing the translational strategy includes: controlling, in a case that the conveying component or the stacking platform moves from the initial position to the extreme position, the conveying component or the stacking platform to move first at a first speed and then at a second speed, where the first speed is greater than the second speed. In this way, the first speed is controlled to be greater than the second speed, such that the conveying component or the stacking platform translates faster at the beginning of folding. This helps to quickly increase the distance of the connecting line between the conveying component and the stacking platform, and quickly release the stress in the folding process, thereby further improving the quality of the stacked battery.

In some embodiments, the ratio of the first speed to the second speed is denoted as β, where 1.5 ≤ β ≤ 2.5. In this way, the ratio of the first speed to the second speed is controlled to be 1.5 to 2.5, such that the response speed to stress relief in the folding process can be improved, and the folding effect can be improved; and meanwhile, the movement control on the conveying component or the stacking platform can also be effectively considered, such that the conveying component or the stacking platform moves stably when the translational strategy is executed.

In some embodiments, β further satisfies the following condition: 1.8 ≤ β ≤ 2.2. In this way, the ratio of the first speed to the second speed is further controlled to be 1.8 to 2.2, such that the response speed to stress relief in the folding process is better; and meanwhile, the movement of the conveying component or the stacking platform can be stably controlled.

In some embodiments, after the conveying component and/or the stacking platform executes the translational strategy, the displacement amount of the conveying end of the conveying component conveying the electrode plate group is a length of at least two stacking areas. In this way, the period of the translational strategy is associated with the conveying period of the conveying component, such that the folding quality of the electrode plate group is more controllable, and the consistency of the product is better.

In some embodiments, the step of executing the translational strategy includes: controlling, each time the reciprocating movement on either side of the initial position is performed, the conveying component and/or the stacking platform to move by a preset displacement amount in a direction away from each other. Thus, the configuration can effectively compensate for space reduction due to increased folding cycles, facilitating the folding of the electrode plate group. Simultaneously, it promotes the stress relief of the electrode plate group during the folding process, improving the quality of the stacked battery.

In some embodiments, a ratio of the preset displacement amount to a thickness of the electrode plate group in the stacking areas is denoted as α, where 1 ≤ α ≤ 5. In this way, the ratio of the preset displacement amount to the thickness of the electrode plate group in the stacking areas is controlled to be 1 to 5, such that the conveying component or the stacking platform retracts by an appropriate displacement amount after folding. This leaves a proper space for the electrode plate group between the conveying component and the stacking platform, thereby implementing a stable and effective folding process.

In some embodiments, α further satisfies the following condition: 2 ≤ α ≤ 3. In this way, the value of α is further controlled to be 2 to 3, such that after each folding, the space between the conveying component and the stacking platform is more reasonably controlled, thereby enabling the folding process of the electrode plate group on the stacking platform more stable.

In some embodiments, before the step of controlling the conveying component and/or the stacking platform to move, the method further includes: controlling a minimum distance between the conveying end of the conveying component and a working surface of the stacking platform to be an initial distance, where a ratio of the initial distance to the length of the stacking area is denoted as λ, where 1.2 ≤ λ ≤ 2. In this way, the ratio of the initial distance to the length of the stacking area is controlled to be 1.2 to 2, such that a cantilevered stacking area is provided between the conveying component and the stacking platform, the folding process can be stably performed, and meanwhile, the folding efficiency is improved. In this way, the ratio of the initial distance to the length of the stacking area is controlled to be 1.2 to 2, such that a cantilevered stacking area is provided between the conveying component and the stacking platform, the folding process can be stably performed, and meanwhile, the folding efficiency is improved.

In some embodiments, λ further satisfies the following condition: 1.3 ≤ λ ≤ 1.6. In this way, the ratio of the initial distance to the length of the stacking area is further controlled to be 1.3 to 1.6, such that the folding of the electrode plate group can be more accurately controlled, thereby further improving the stability and the folding efficiency in the folding process. In this way, the ratio of the initial distance to the length of the stacking area is further controlled to be 1.3 to 1.6, such that the folding of the electrode plate group can be more accurately controlled, thereby further improving the stability and the folding efficiency in the folding process.

In some embodiments, in response to the step of the stacking areas being folded on the stacking platform, the method includes: controlling the displacement amount of the conveying end of the conveying component conveying the electrode plate group to be a third displacement, where a ratio of the third displacement to the length of the stacking area is denoted as ε, where 2 ≤ ε ≤ 10. In this way, the displacement amount of the conveying end of the conveying component conveying the electrode plate group is controlled to be 2 to 10, such that at least one stacking area has been folded on the stacking platform. This facilitates stress relief of the stacking areas during the folding, reduces the bending and warping at the folding position, and improves the quality of the stacked battery.

In some embodiments, ε further satisfies the following condition: 2.1 ≤ ε ≤ 2.9. In this way, the displacement amount of the conveying end of the conveying component conveying the electrode plate group is further controlled to be 2.1 to 2.9, such that the folding cycles of the stacking areas on the stacking platform are reduced before the translational strategy is executed. Therefore, most of the folding processes of the electrode plate group can benefit from the translational strategy, thereby further improving the quality of the stacked battery.

According to a second aspect, the present application provides an electrode plate folding control apparatus, adopting the electrode plate folding control method according to any one of the above embodiments, where the electrode plate folding control apparatus includes: a response module, configured to acquire a situation of the stacking areas being folded on the stacking platform, and feed back a signal; and an execution module, configured to control the conveying component to operate and control, according to the signal fed back by the response module, the conveying component and/or the stacking platform to reciprocate in the preset direction, where the preset direction intersects with the direction in which the conveying component is spaced from the stacking platform.

According to a third aspect, the present application provides an electrode plate folding apparatus, where the electrode plate folding apparatus includes: an electrode plate folding mechanism, including a stacking platform and a conveying component configured to convey an electrode plate group and fold the electrode plate group back and forth on the stacking platform; and a driving mechanism, configured to drive the conveying component and/or the stacking platform to reciprocate in a preset direction, where the preset direction intersects with a direction in which the conveying component is spaced from the stacking platform.

According to a fourth aspect, the present application provides a battery production system, where the battery production system includes the electrode plate folding apparatus as described above.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts. In the drawings:
FIG. 1 is a first schematic flowchart of an electrode plate folding control method according to some embodiments of the present application.
FIG. 2 is a schematic structural diagram of an electrode plate group in a folding process according to some embodiments of the present application.
FIG. 3 is a schematic structural diagram of a bent part of the electrode plate group at the folding position according to some embodiments of the present application.
FIG. 4 is a schematic structural diagram of gaps at the folding positions of a stacked structure according to some embodiments of the present application.
FIG. 5 is a second schematic flowchart of an electrode plate folding control method according to some embodiments of the present application.
FIG. 6 is a schematic structural diagram of a folding process of an electrode plate group according to some embodiments of the present application, and (a) to (e) in FIG. 6 are schematic structural diagrams corresponding to different steps of the electrode plate group in the folding process when a stacking platform executes a translational strategy according to some embodiments of the present application.
FIG. 7 is a third schematic flowchart of an electrode plate folding control method according to some embodiments of the present application.
FIG. 8 is a fourth schematic flowchart of an electrode plate folding control method according to some embodiments of the present application.
FIG. 9 is a schematic structural diagram of a folding process of an electrode plate group according to some other embodiments of the present application, and (a) to (e) in FIG. 9 are schematic structural diagrams corresponding to different steps of the electrode plate group in the folding process when a conveying component executes a translational strategy according to some other embodiments of the present application.
FIG. 10 is a graph illustrating a specific translational displacement amplitude curve of a stacking platform according to some embodiments of the present application.
FIG. 11 is a schematic structural diagram of an electrode plate group in an electrode plate folding mechanism before a translational strategy is executed according to some embodiments of the present application.
FIG. 12 is a schematic structural diagram of an electrode plate folding control apparatus according to some embodiments of the present application.

100: electrode plate folding apparatus; 10: electrode plate folding mechanism; 1a: first displacement; 1b: second displacement; 1c: initial position; 1d: preset displacement amount; 1e: initial distance; 1f: gap; 1g: extreme position; 11: conveying component; 111: first roller; 112: second roller; 113: conveying end; 12: stacking platform; 121: working surface; 20: electrode plate group; 21: stacking area; 22: first electrode plate; 23: second electrode plate; 24: separator; 25: folding position; 26: folding start point; 30: driving mechanism; X: preset direction; Y: spacing direction; 200: response module; 300: execution module.

### DETAILED DESCRIPTION

To make the aforementioned objects, features, and advantages of the present application more clear and comprehensible, embodiments of the present application will be described in detail in conjunction with the drawings below. In the following description, numerous specific details are set forth in order to provide a thorough understanding of the present application. However, the present application can be implemented in many other ways different from those described herein, and similar improvements can be made by those skilled in the art without departing from the spirit of the present application, such that the present application is not limited to the specific embodiments disclosed below.

In the description of the present application, it should be understood that if there are the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, the directional or positional relationships indicated by the terms are based on the directional or positional relationships shown in the drawings. They are merely for the convenience of describing the present application and simplifying the description, and are not intended to indicate or imply that the apparatuses or elements referred to must have specific directions or must be constructed and operated in specific directions. Therefore, these terms should not be construed as limitations on the present application.

In addition, if there are the terms "first" and "second", the terms are used for descriptive purposes only and are not to be construed as indicating or implying relative importance or to implicitly indicate the number of technical features indicated. Thus, a feature defined by "first" or "second" may explicitly or implicitly show that at least one such feature is included. In the description of the present application, if there is the term "a plurality of", unless otherwise explicitly limited, the term "a plurality of" means at least two, for example, two, three, and the like.

In the present application, unless otherwise explicitly specified or limited, if there are the terms "mount", "link" "connect", "fix", and the like, the terms should be construed in a broad sense. For example, unless otherwise explicitly limited, they may be a fixed connection, a detachable connection, or an integral connection; a mechanical connection or an electrical connection; or a direct connection, an indirect connection through an intermediate, internal communication between two elements, or interaction between two elements. For those of ordinary skill in the art, the specific meanings of the aforementioned terms in the present application can be understood according to specific conditions.

In the present application, unless otherwise explicitly specified or limited, if there is a description that a first feature is "above" or "below" a second feature and other similar descriptions, the meanings thereof may be that the first feature and the second feature are in direct contact, or that the first feature and the second feature are in indirect contact through an intermediate. Moreover, a first feature being "over", "above", and "on top of" a second feature may be that the first feature is right above or obliquely above the second feature, or simply mean that the first feature is at a higher horizontal level than the second feature. A first feature being "under", "below", and "beneath" a second feature may be that the first feature is right under or obliquely under the second feature, or may simply mean that the first feature is at a lower horizontal level than the second feature.

It should be noted that if an element is referred to as being "fixed to" or "disposed on" another element, the element may be directly on the other element or there may be an intermediate element in between. If an element is referred to as being "connected" to another element, the element may be directly connected to the other element or there may also be an intermediate element in between. The terms "vertical", "horizontal", "upper", "lower", "left", "right", and similar descriptions, if present, are used herein for descriptive purposes only and do not necessarily represent the only implementation.

At present, judging from the trends in the market, the application of power batteries is becoming increasingly widespread. Power batteries are not only applied in energy storage power systems such as hydropower, thermal power, wind power, and solar power stations, but are also widely applied in electric transportation vehicles such as electric bicycles, electric motorcycles, or electric cars, as well as in military equipment, aerospace, and other fields. With the continuous expansion of the application field of power batteries, the market demand for power batteries is also constantly increasing.

In batteries, the electrode assembly, which serves as the component that undergoes an electrochemical reaction, is usually formed by stacking a positive electrode plate, a separator, and a negative electrode plate. During the stacking process, an electrode plate group formed by the stacked negative electrode plate, separator, and positive electrode plate may be folded in a zigzag configuration. For example, one stacking area of the electrode plate group is folded on the stacking platform in a rightward bending direction; after folding, another stacking area connected to the stacking area is folded in a leftward bending direction; and this process is repeated to form a Z-shaped stacked structure. Generally, for a stacked battery formed by a conventional folding method, a lithium plating problem occurs at the folding position of the electrode plate, resulting in a decrease in the quality of the stacked battery.

Based on this, to effectively solve the problem that a stacked structure formed in a conventional folding manner is prone to lithiation at the folding position, the present application provides an electrode plate folding control method. In the process of folding an electrode plate group, a conveying component is controlled to operate to drive the electrode plate group to move towards a stacking platform. When the stacking area begins to be folded or has been folded on the stacking platform, at least one of the conveying component and the stacking platform is controlled to translate transversely in the preset direction, such that the distance of the connecting line between the conveying end of the conveying component and the folding start point of the stacking area on the stacking platform increases. In this way, a clearance space can be provided for folding of the stacking areas, thereby facilitating stress relief of the stacking areas during folding, reducing the pulling force of a stacking area in a folded state on a non-folded stacking area, and reducing the degree of bending and warping of the stacking area at the folding position. In this case, the probability of a gap anomaly being generated at a folding position of a formed stacked structure is reduced, such that the probability of lithium plating occurring in an electrode plate at the folding position is effectively reduced, thereby improving the quality of a stacked battery.

In some embodiments of the present application, the electrode assembly is a component that undergoes an electrochemical reaction in the battery and may be formed by stacking a positive electrode plate and a negative electrode plate, and a separator is generally disposed between the positive electrode plate and the negative electrode plate. The portions of the positive electrode plate and the negative electrode plate that contain the active substance constitute the body part of the electrode assembly, and the portions of the positive electrode plate and the negative electrode plate that do not contain the active substance each constitute a tab. The positive electrode tab and the negative electrode tab may be located together at one end of the body part or separately at two ends of the body part. During the charging and discharging process of the battery, the positive electrode active substance and the negative electrode active substance react with the electrolyte, and the tabs are connected to the electrode terminals to form a current circuit.

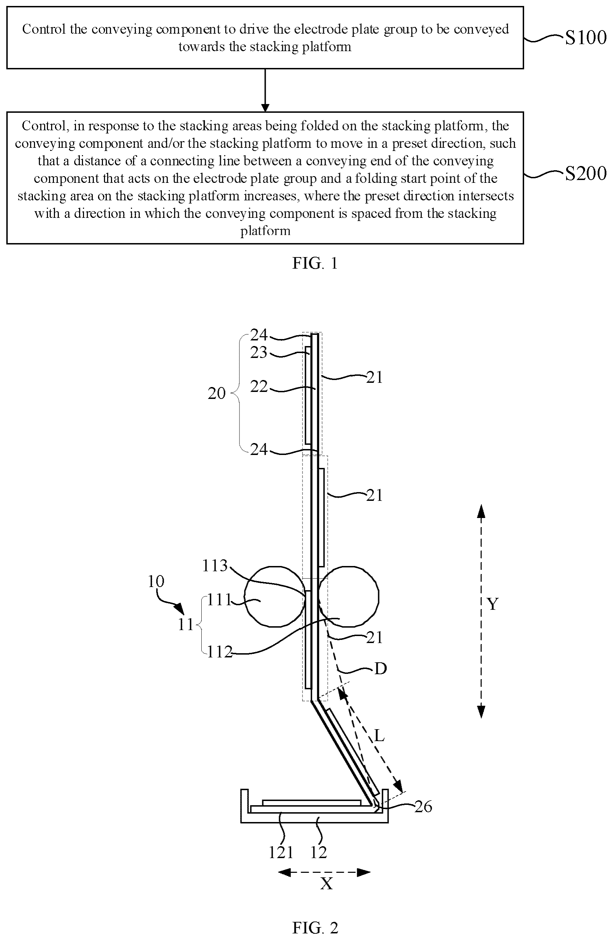

According to some embodiments of the present application, referring to FIG. 1 and FIG. 2, the present application provides an electrode plate folding control method, an electrode plate folding mechanism 10 including a stacking platform 12 and a conveying component 11 configured to convey an electrode plate group 20, where the electrode plate group 20 is provided with a plurality of stacking areas 21 along a length direction thereof; and the electrode plate folding control method includes the following steps:
S100, controlling the conveying component 11 to drive the electrode plate group 20 to be conveyed towards the stacking platform 12; and
S200, controlling, in response to the stacking areas 21 being folded on the stacking platform 12, the conveying component 11 and/or the stacking platform 12 to move in a preset direction X, such that a distance of a connecting line between a conveying end 113 of the conveying component 11 that acts on the electrode plate group 20 and a folding start point 26 of the stacking area 21 on the stacking platform 12 increases, where the preset direction X intersects with a direction Y in which the conveying component 11 is spaced from the stacking platform 12.

The electrode plate folding mechanism 10 refers to a device that can fold the electrode plate group 20 back and forth on the stacking platform 12 in a zigzag configuration. The electrode plate group 20 refers to a combined structure formed by stacking a first electrode plate 22, a separator 24, and a second electrode plate 23. To ensure that the electrode plate group 20 can be continuously folded back and forth in a zigzag configuration to form a stacked structure, the electrode plate group 20 is provided with a plurality of continuous and foldable stacking areas 21 along the length direction thereof, and a fold line is present between two adjacent stacking areas 21. The fold line may be disposed on one side surface of the electrode plate group 20, or may be disposed on two opposite side surfaces of the electrode plate group 20, that is, double-sided fold lines. Certainly, the concept of the stacking areas 21 may also be defined by the fold lines on the electrode plate group 20. For example, along the length direction of the electrode plate group 20, an area between two adjacent fold lines is the stacking area 21. In addition, it should be noted that folding the stacking area 21 is essentially folding a portion of the corresponding electrode plate group 20 in the stacking area 21. For ease of description, the folding is abbreviated as folding the stacking area 21 in the entire specification.

In order to ensure that the stacking areas 21 are folded back and forth (which may also be understood as folded left and right), the first electrode plate 22 and the separator 24 may be designed as continuous strip structures, and the second electrode plate 23 may be die-cut into structures of a required dimension which are disposed in the stacking areas 21 in a one-to-one correspondence manner. In addition, in two adjacent stacking areas 21, two second electrode plates 23 are separately located on different sides of the electrode plate group 20. The first electrode plate 22 may be the negative electrode plate, and the second electrode plate 23 may be the positive electrode plate.

The conveying component 11 refers to a device that provides conveying power for the electrode plate group 20, and may be of a roller structure. For example, the conveying component 11 may include a first roller 111 and a second roller 112 that cooperate with each other, and the electrode plate group 20 is clamped between the first roller 111 and the second roller 112. In this case, the conveying end 113 of the conveying component 11 that acts on the electrode plate group 20 may be understood as the end of the first roller 111 or the second roller 112 in contact with the electrode plate group 20. Certainly, in some embodiments, for the determination of the conveying end 113 of the conveying component 11, the intersection point between the line connecting the centers of the first roller 111 and the second roller 112 and the first roller 111 or the second roller 112 may also be considered as the conveying end 113 of the conveying component 11. The folding start point 26 of the stacking area 21 on the stacking platform 12 refers to an end of the stacking area 21 that begins to be folded on the stacking platform 12.

The stacking platform 12 refers to a structure configured to hold the stacked structure and provide a supporting force for the folding process. For example, in the folding process, the conveying component 11 moves the electrode plate group 20 towards the stacking platform 12, such that one end of the stacking area 21 is in contact with the working surface 121 of the stacking platform 12. As the conveying continues, one end of the stacking area 21 is gradually bent and fitted to the working surface 121 by taking the folding start point 26 on the working surface 121 as a folding point.

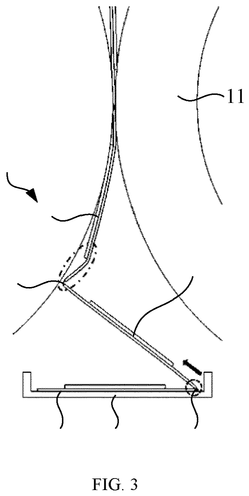

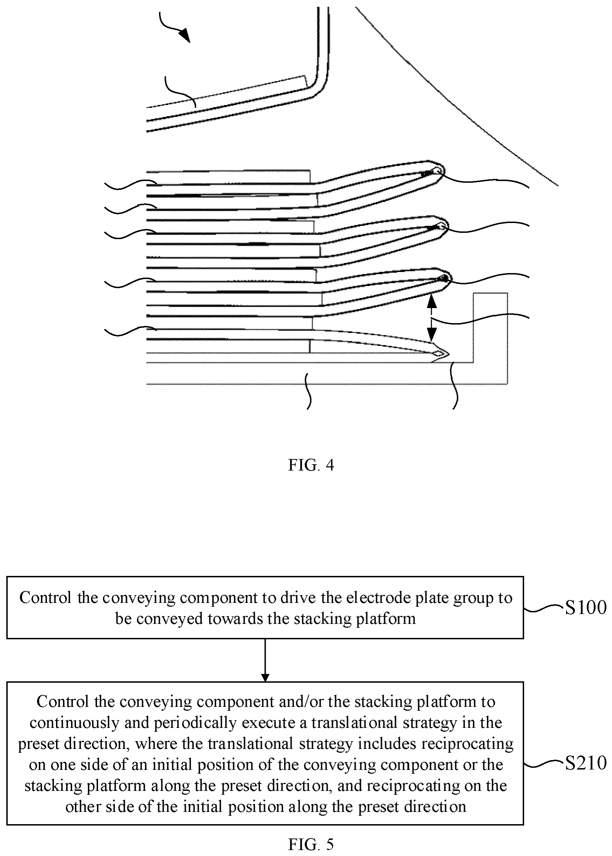

When one end of the stacking area 21 is folded by taking the folding start point 26 as a folding point, the other end of the stacking area 21 is subjected to a pulling force from the stacking platform 12, causing bending and warping of one end of the adjacent stacking area 21 under the force. For example, in some embodiments, referring to FIG. 3, when a stacking area 21 is folded, the stacking area 21 is subjected to a pulling force at a folding start point 26. The pulling force is transmitted through the stacking area 21 to the adjacent stacking area 21, causing an end of the stacking area 21 that is unfolded to bend. Bending and warping may cause abnormal gap 1f between two adjacent folding positions 25; for example, the gap 1f is too large. Specifically, referring to FIG. 4, the wettability of the electrolyte becomes poor, and the kinetics of lithium ions is relatively weak, such that the folding positions 25 are prone to lithiation.

In this case, if the distance of the connecting line between the folding start point 26 of the stacking area 21 and the conveying end 113 of the conveying component 11 increases, a pulling force of the working surface 121 on the stacking area 21 is weakened, and the degree of bending and warping of the adjacent stacking area 21 that is unfolded is also reduced.

In step S200, when at least one of the conveying component 11 and the stacking platform 12 is driven to move, it can be determined whether the stacking area 21 is folding on the stacking platform 12. If no stacking area 21 is folding, one end of the stacking area 21 will not be bent, so it is unnecessary to drive the conveying component 11 and/or the stacking platform 12 to move in the preset direction X. The preset direction X intersects with the spacing direction Y. Specifically, in some embodiments, the preset direction X is perpendicular to the spacing direction Y.

It is not difficult to understand that, to implement folding of the stacking area 21 on the stacking platform 12, when the folding start point 26 of the stacking area 21 is just in contact with the stacking platform 12, the folding start point 26 and the working surface 121 of the stacking platform 12 should be disposed at an acute angle, such that the stacking area 21 can be stably folded depending on the conveying force of the conveying component 11. Therefore, if the distance of the connecting line between the conveying end 113 of the conveying component 11 and the folding start point 26 of the stacking area 21 needs to be increased in a translation manner, a translation direction of the stacking platform 12 should be opposite to the folding direction of the stacking area 21, or the translation direction of the conveying component 11 should be the same as the folding direction of the stacking area 21.

For ease of understanding, FIG. 2 is taken as an example. When the stacking area 21 is folded towards the left, the translation manner of the stacking platform 12 should be translation towards the right of the initial position 1c, or the translation manner of the conveying component 11 should be translation towards the left of the initial position 1c. When the stacking area 21 is folded towards the right, the translation manner of the stacking platform 12 should be translation towards the left of the initial position 1c, or the translation manner of the conveying component 11 should be translation towards the right of the initial position 1c, and so on.

The initial position 1c refers to a position where the conveying component 11 or the stacking platform 12 is located when the translational strategy is not executed. For convenience of identifying the initial position 1c, the position corresponding to the center of the stacking platform 12 or the conveying component 11 can be taken as the initial position 1c.

It should be noted that in the embodiments of the present application, "the increase in the distance of the connecting line" does not mean that the distance of the connecting line increases all the time during the movement of the conveying component 11 or the stacking platform 12, but that the distance of the connecting line between the conveying end 113 of the conveying component 11 and the folding start point 26 of the stacking area 21 on the stacking platform 12 will increase in a period of time during the movement of the conveying component 11 or the stacking platform 12. For example, as the conveying component 11 or the stacking platform 12 moves, the distance of the connecting line between the conveying end 113 of the conveying component 11 and the folding start point 26 on the stacking area 21 may periodically follow a rule of first increasing and then decreasing. In addition, for ease of understanding "the distance of the connecting line", referring to FIG. 2, the distance of the connecting line between the conveying end 113 of the conveying component 11 and the folding start point 26 of the stacking area 21 on the stacking platform 12 may be a distance represented by D in FIG. 2.

In this design, a clearance space can be provided for folding of the stacking area 21, thereby facilitating stress relief of the stacking area during folding, reducing a pulling force of the stacking area 21 in a folded state on a stacking area 21 that is unfolded, and reducing the degree of bending and warping of the stacking area 21 at a folding position 25. Thus, the probability of abnormal gaps 1f being generated at the folding position 25 of a stacked structure is reduced, thereby effectively reducing the probability of lithium plating of the electrode plate at the folding position 25, and improving the quality of the stacked battery.

According to some embodiments of the present application, referring to FIG. 5, the step S200 of controlling the conveying component 11 and/or the stacking platform 12 to move in the preset direction X includes:
S210, controlling the conveying component 11 and/or the stacking platform 12 to continuously and periodically execute a translational strategy in the preset direction X, where the translational strategy includes reciprocating on one side of an initial position 1c of the conveying component 11 or the stacking platform 12 along the preset direction X, and reciprocating on the other side of the initial position 1c along the preset direction X.

Continuously and periodically executing the translational strategy means that when the conveying component 11 or the stacking platform 12 completes one translational strategy, then another translational strategy is executed, and so on.

The translational strategy means that in one cycle, the conveying component 11 or the stacking platform 12 reciprocates on one side of the initial position 1c along the preset direction X, and then reciprocates on the other side of the initial position 1c along the preset direction X. The "reciprocating movement" means that on any side of the initial position 1c, the conveying component 11 or the stacking platform 12 starts to move from the initial position 1c to a certain position, and then returns from the position back to the initial position 1c. The conveying component 11 or the stacking platform 12 may reciprocate once or multiple times on one side of the initial position 1c. Specifically, in some embodiments, during the execution of the strategy, the conveying component 11 and/or the stacking platform 12 is controlled to first reciprocate once on one side of the initial position 1c of the conveying component 11 or the stacking platform 12 along the preset direction X, and then reciprocate once on the other side of the initial position 1c along the preset direction X.

It should be noted that if the conveying component 11 and the stacking platform 12 are both controlled to execute the translational strategy, the conveying component 11 and the stacking platform 12 separately reciprocate on different sides of the initial position 1c corresponding thereto. For example, when the conveying component 11 reciprocates on the left side of the initial position 1c, the stacking platform 12 reciprocates on the right side of the initial position 1c; or when the conveying component 11 reciprocates on the right side of the initial position 1c, the stacking platform 12 reciprocates on the left side of the initial position 1c, and so on. Certainly, when the translational strategy is executed, the reciprocating period of the conveying component 11 coincides with the reciprocating period of the stacking platform 12.

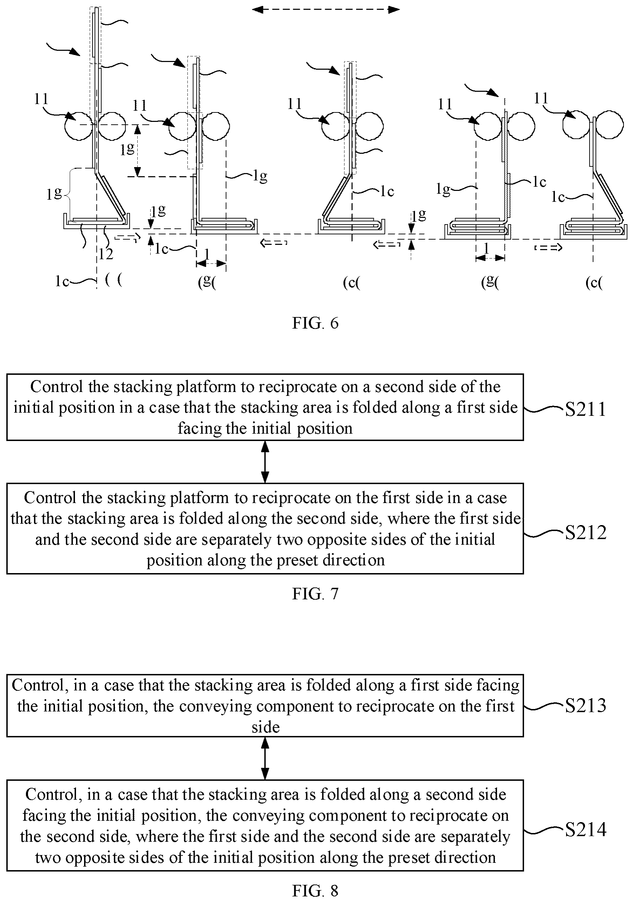

When the stacking area 21 is folded on the stacking platform 12, referring to FIG. 6, (a) in FIG. 6 is a schematic structural diagram of the electrode plate group 20 corresponding to the case that the stacking platform 12 does not execute the translational strategy in the folding process according to some embodiments of the present application; (b) in FIG. 6 is a schematic structural diagram of the electrode plate group 20 corresponding to the case that the stacking platform 12 moves to the extreme position 1g to the right in the folding process according to some embodiments of the present application; (c) in FIG. 6 is a schematic structural diagram of the electrode plate group 20 corresponding to the case that the stacking platform 12 returns to the initial position 1c in the folding process according to some embodiments of the present application; (d) in FIG. 6 is a schematic structural diagram of the electrode plate group 20 corresponding to the case that the stacking platform 12 moves to the extreme position 1g to the left in the folding process according to some embodiments of the present application; and (e) in FIG. 6 is a schematic structural diagram of the electrode plate group 20 corresponding to the case that the stacking platform 12 returns to the initial position 1c in the folding process according to some embodiments of the present application. The stacking platform 12 is driven to move to the right side of the preset direction X, such that the distance between the conveying component 11 and the stacking platform 12 can increase, thus providing a clearance space for folding the stacking area 21. This facilitates pulling force relief of the stacking area 21 and reduces the degree of bending and warping of one end of the stacking area 21. Then, the stacking platform 12 is driven to return to the initial position 1c in an opposite direction, such that the stacking area 21 is completely folded on the stacking platform 12; then, the stacking platform 12 is driven to move to the left side of the preset direction X, such that the distance between the conveying component 11 and the stacking platform 12 can increase; and finally, the stacking platform 12 is driven to return to the initial position 1c in an opposite direction, such that another stacking area 21 is also completely folded on the stacking platform 12.

In addition, it should be noted that the stacking platform 12 itself has a certain volume, so its initial position has a certain space, and its actual area does not refer to only the position indicated by 1c in FIG. 6. However, for ease of understanding a moving rule, the initial position 1c of the middle portion of the stacking platform 12 is taken as an initial position of the stacking platform 12, and the extreme position 1g of the middle portion of the stacking platform 12 is taken as an extreme position of the stacking platform 12 for description. Certainly, in the illustrated translation process of the stacking platform 12, other portions on the stacking platform 12 can also be taken as reference, such as the leftmost portion of the stacking platform 12 or the rightmost portion of the stacking platform 12.

To further improve the folding effect, the execution timing of the translational strategy may be determined when the stacking area 21 just starts to be folded on the stacking platform 12, or it can be understood that the folding action of the previous stacking area 21 is just completed. At the same time, the end timing of the translational strategy may also be determined when the stacking area 21 is completely folded on the stacking platform 12.

In this design, in the process of folding the electrode plate group 20, at least one of the conveying component 11 and the stacking platform 12 is controlled to periodically execute the translational strategy, to provide effective clearance space for the folding process of the stacking areas 21, which facilitates stress relief of the stacking areas 21, reduces the degree of bending and warping of the stacking areas 21, and improves the quality of the stacked battery.

According to some embodiments of the present application, referring to FIG. 7, the step of executing the translational strategy includes:
S211, controlling the stacking platform 12 to reciprocate on the second side of the initial position 1c in a case that the stacking area 21 is folded along the first side facing the initial position 1c; and
S212, controlling the stacking platform 12 to reciprocate on the first side in a case that the stacking area 21 is folded along the second side, where the first side and the second side are separately two opposite sides of the initial position 1c along the preset direction X.

The first side and the second side are separately two opposite sides of the initial position 1c along the preset direction X. For ease of understanding, the figure is taken as an example for description. The first side may be the left side of the initial position 1c in FIG. 6, and the second side may be the right side of the initial position 1c in FIG. 6. When the stacking area 21 is folded leftward on the stacking platform 12, the stacking platform 12 reciprocates on the right side of the initial position 1c. For example, the stacking platform 12 is on the right side of the initial position 1c, moves from the initial position 1c to a specific position in the right direction, and then returns from this position to the initial position 1c.

When the stacking area 21 is folded rightward on the stacking platform 12, the stacking platform 12 reciprocates on the left side of the initial position 1c. For example, the stacking platform 12 is on the left side of the initial position 1c, moves from the initial position 1c to a specific position in the left direction, and then returns from this position to the initial position 1c.

Specifically, in some embodiments, when the stacking area 21 is folded along the first side on the stacking platform 12, the stacking platform 12 completes one reciprocating movement on the second side of the initial position 1c; when the stacking area 21 is folded along the second side on the stacking platform 12, the stacking platform 12 completes one reciprocating movement on the first side of the initial position 1c.

As such, the side of the stacking platform 12 that reciprocates is disposed opposite to the folding direction of the stacking area 21, such that the distance of the connecting line between the conveying end 113 of the conveying component 11 and the folding start point 26 of the stacking area 21 can increase, and the space between the conveying component 11 and the stacking platform 12 increases, which facilitates stress relief, reduces the bending and warping at the folding position 25, and improves the quality of the stacked battery.

According to some embodiments of the present application, referring to FIG. 8, the step of executing the translational strategy includes:
S213, controlling, in a case that the stacking area 21 is folded along a first side facing the initial position 1c, the conveying component 11 to reciprocate on the first side; and
S214, controlling, in a case that the stacking area 21 is folded along a second side facing the initial position 1c, the conveying component 11 to reciprocate on the second side, where the first side and the second side are separately two opposite sides of the initial position 1c along the preset direction X.

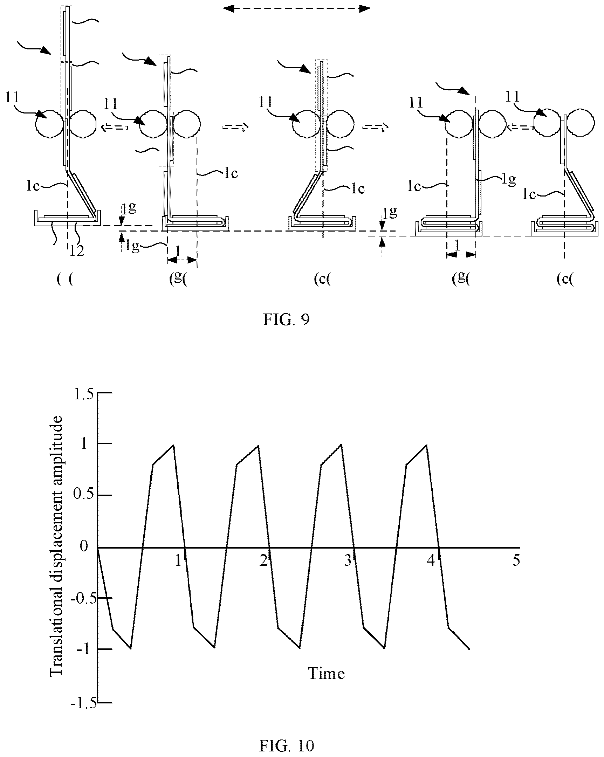

For ease of understanding, FIG. 9 is taken as an example for description. The first side may be the left side of the initial position 1c in FIG. 9, and the second side may be the right side of the initial position 1c in FIG. 9. (a) in FIG. 9 is a schematic structural diagram of the electrode plate group 20 corresponding to the case that the conveying component 11 does not execute the translational strategy in the folding process according to some embodiments of the present application; (b) in FIG. 9 is a schematic structural diagram of the electrode plate group 20 corresponding to the case that the conveying component 11 moves to the extreme position 1g to the left in the folding process according to some embodiments of the present application; (c) in FIG. 9 is a schematic structural diagram of the electrode plate group 20 corresponding to the case that the conveying component 11 returns to the initial position 1c in the folding process according to some embodiments of the present application; (d) in FIG. 9 is a schematic structural diagram of the electrode plate group 20 corresponding to the case that the conveying component 11 moves to the extreme position 1g to the right in the folding process according to some embodiments of the present application; and (e) in FIG. 9 is a schematic structural diagram of the electrode plate group 20 corresponding to the case that the conveying component 11 returns to the initial position 1c in the folding proces according to some embodiments of the present application. When the stacking area 21 is folded leftward on the stacking platform 12, the conveying component 11 reciprocates on the left side of the initial position 1c. For example, the conveying component 11 is on the left side of the initial position 1c, moves from the initial position 1c to a specific position in the left direction, and then returns from this position to the initial position 1c.

When the stacking area 21 is folded rightward on the stacking platform 12, the conveying component 11 reciprocates on the right side of the initial position 1c. For example, the conveying component 11 is on the right side of the initial position 1c, moves from the initial position 1c to a specific position in the right direction, and then returns from this position to the initial position 1c.

Also, it should be noted that the conveying component 11 itself has a certain volume, so its initial position has a certain space, and its actual area does not refer to only the position indicated by 1c in FIG. 6. However, for ease of understanding a moving rule, the initial position 1c of the middle portion of the conveying component 11 is taken as an initial position of the conveying component 11, and the extreme position 1g of the middle portion of the conveying component 11 is taken as an extreme position of the conveying component 11 for description. Certainly, in the illustrated translation process of the conveying component 11, other portions on the conveying component 11 can also be taken as reference, such as the leftmost portion of the conveying component 11 or the rightmost portion of the conveying component 11.

Specifically, in some embodiments, when the stacking area 21 is folded along the first side on the stacking platform 12, the conveying component 11 completes one reciprocating movement on the first side of the initial position 1c; when the stacking area 21 is folded along the second side on the stacking platform 12, the conveying component 11 completes one reciprocating movement on the second side of the initial position 1c.

As such, the side of the conveying component 11 that reciprocates is disposed same as the folding direction of the stacking area 21, such that the distance of the connecting line between the conveying end 113 of the conveying component 11 and the folding start point 26 of the stacking area 21 can increase, and the space between the conveying component 11 and the stacking platform 12 increases, which facilitates stress relief, reduces the bending and warping at the folding position 25, and improves the quality of the stacked battery.

According to some embodiments of the present application, the positions through which the conveying component 11 or the stacking platform 12 reciprocates on either side of the initial position 1c include the initial position 1c and an extreme position 1g, and the extreme position 1g is spaced from the initial position 1c in the preset direction X.

The extreme position 1g refers to an area that can be furthest away from the initial position 1c when the conveying component 11 or the stacking platform 12 moves on one side of the initial position 1c. When the conveying component 11 or the stacking platform 12 starts to execute the translational strategy, the conveying component 11 or the stacking platform 12 starts to move from the initial position 1c to the extreme position 1g, and then returns from the extreme position 1g to the initial position 1c. Meanwhile, in some embodiments, when the conveying component 11 or the stacking platform 12 moves to the extreme position 1g, the stacking area 21 stacked on the stacking platform 12 and the stacking area 21 adjacent thereto can be substantially perpendicularly designed, and for example, the angle between the two may be 80° to 90°.

If the conveying component 11 or the stacking platform 12 completes one reciprocating movement between the initial position 1c and the extreme position 1g, the stacking platform 12 can just complete folding of one stacking area 21. In this case, different correspondences may be present between the movement of the conveying component 11 or the stacking platform 12 and the folding action of the stacking area 21. For example, when the conveying component 11 or the stacking platform 12 moves from the initial position 1c to the extreme position 1g, the stacking area 21 can complete half of the folding amount, or complete less than or greater than half of the folding amount.

To facilitate quantification of the folding amount of the stacking area 21, a conveying amount at the conveying end 113 of the conveying component 11 may be used. For example, when the conveying component 11 or the stacking platform 12 moves from the initial position 1c to the extreme position 1g, the conveying amount of the electrode plate group 20 conveyed by the conveying end 113 of the conveying component 11 may be half of the length of the stacking area 21, or less than or greater than half of the length of the stacking area 21; and the remaining length of the stacking area 21 corresponds to the movement from the extreme position 1g to the initial position 1c.

The translational path of the conveying component 11 or the stacking platform 12 is disposed between the initial position 1c and the extreme position 1g, such that the reciprocating movement of the conveying component 11 or the stacking platform 12 can be associated with the folding action of the stacking areas 21, and the effective control of the folding process of the electrode plate group 20 is enhanced.

According to some embodiments of the present application, referring to FIG. 6, the distance between the extreme position 1g and the initial position 1c is denoted as a first displacement 1a, and a ratio of the first displacement 1a to a length of the stacking area 21 is denoted as η, where in a case that one of the conveying component 11 and the stacking platform 12 is controlled to execute the translational strategy, 0 < η ≤ 0.7.

It should be noted that if both the conveying component 11 and the stacking platform 12 are controlled to execute the translational strategy, the sum of the displacements of the conveying component 11 and the stacking platform 12 from the initial position 1c to the extreme position 1g is twice the first displacement 1a. Therefore, in this case, the range of the ratio of the first displacement 1a to the length of the stacking area 21 can be correspondingly reduced.

The value of the first displacement 1a affects the distance of the connecting line between the conveying end 113 of the conveying component 11 and the folding start point 26 of the stacking area 21. For example, if the value of the first displacement 1a is excessively large, the distance of the connecting line between the conveying end 113 of the conveying component 11 and the folding start point 26 of the stacking area 21 excessively increases. Consequently, more than two stacking areas 21 may be suspended between the conveying component 11 and the stacking platform 12, resulting in a poor folding effect of the electrode plate group 20. In addition, the folding efficiency of the electrode plate group 20 is also reduced.

Therefore, the value of η is controlled to be 0 to 0.7. For example, the value of η may be, but is not limited to, 0.1, 0.2, 0.3, 0.4, 0.5, 0.6, 0.7, or the like.

In addition, for ease of understanding the length of the stacking area 21, FIG. 2 is taken as an example, and the length of the stacking area 21 may be a dimension represented by L in FIG. 2.

The ratio of the first displacement 1a to the length of the stacking area 21 is controlled to be 0 to 0.7, which facilitates stress relief of the electrode plate group 20 in the folding process and improves the quality of the stacked battery; and meanwhile, this also facilitates the improvement of the folding efficiency of the electrode plate group 20.

According to some embodiments of the present application, η further satisfies the following condition: 0.4 ≤ η ≤ 0.5.

The value of η may also be controlled to be 0.4 to 0.5. For example, the value of η may be, but is not limited to, 0.4, 0.41, 0.42, 0.43, 0.44, 0.45, 0.46, 0.47, 0.48, 0.49, 0.5, or the like. When the value of η is 0.4, it indicates that the reciprocating distance of the conveying component 11 or the stacking platform 12 is the length of 0.4 of the stacking areas 21. When the value of η is 0.5, it indicates that the reciprocating distance of the conveying component 11 or the stacking platform 12 is the length of half of the stacking area 21.

The value of the ratio of the first displacement 1a to the length of the stacking area 21 is further controlled to be 0.4 to 0.5, such that the folding process of the electrode plate group 20 is controlled more accurately, and both the folding effect and the folding efficiency of the electrode plate group 20 can be effectively considered.

According to some embodiments of the present application, referring to FIG. 6, when the conveying component 11 and/or the stacking platform 12 moves from the initial position 1c to the extreme position 1g, a displacement amount of the conveying end 113 of the conveying component 11 conveying the electrode plate group 20 is controlled to be a second displacement 1b, and a ratio of the second displacement 1b to the length of the stacking area 21 is denoted as γ, where 0.3 ≤ γ ≤ 0.7.

It is not difficult to understand that since the conveying component 11 is in an operating state all the time during the folding process, when the conveying component 11 or the stacking platform 12 moves from the initial position 1c to the extreme position 1g, the conveying end 113 of the conveying component 11 also drives the electrode plate group 20 to be conveyed towards one side of the stacking platform 12. In this case, when the conveying component 11 or the stacking platform 12 moves to the extreme position 1g, the conveying amount of the electrode plate group 20 is correspondingly a second displacement 1b. Certainly, it can also be understood as the displacement amount of the electrode plate group 20 when the conveying component 11 and/or the stacking platform 12 moves from the initial position 1c to the extreme position 1g.

In addition, when the conveying component 11 or the stacking platform 12 starts to perform the first step in the translational strategy, that is, when the conveying component 11 or the stacking platform 12 starts to move from the initial position 1c towards the extreme position 1g, one of the stacking areas 21 may be controlled to initiate folding or maintain folding within the initial stage on the stacking platform 12, and so on.

γ may have a value of 0.3 to 0.7; for example, γ may be, but is not limited to, 0.3, 0.4, 0.5, 0.6, 0.7, or the like. When γ is 0.5, it indicates that the conveying component 11 conveys half of the stacking area 21 of the electrode plate group 20. If, for example, executing the translational strategy once corresponds to the conveying component 11 conveying two stacking areas 21, during the process of the translational strategy, after executing the first step of the translational strategy, that is, when moving from the initial position 1c to the extreme position 1g, the conveying component 11 correspondingly conveys half of the stacking area 21; and after executing the second step of the translational strategy, that is, when returning from the extreme position 1g to the initial position 1c, the conveying component 11 correspondingly conveys the other half of the stacking area 21.

The ratio of the second displacement 1b to the length of the stacking area 21 is controlled to be 0.3 to 0.7, such that at least 30% of the stacking areas 21 in the electrode plate group 20 are conveyed when the conveying component 11 or the stacking platform 12 completes the first step of the translational strategy. This helps reduce the bending and warping of the electrode plate group 20 at the folding position 25, thereby improving the quality of the stacked battery.

According to some embodiments of the present application, γ further satisfies the following condition: 0.3 ≤ γ ≤ 0.4.

γ may have a value of 0.3 to 0.4; for example, γ may be, but is not limited to, 0.3, 0.31, 0.32, 0.33, 0.34, 0.35, 0.36, 0.37, 0.38, 0.39, 0.4, or the like.

The ratio of the second displacement 1b to the length of the stacking area 21 is further controlled to be 0.3 to 0.4, which is beneficial to further effectively controlling the folding process of the electrode plate group 20, thereby making the quality of the stacked battery better controllable.

According to some embodiments of the present application, the step of executing the translational strategy includes: controlling, in a case that the conveying component 11 or the stacking platform 12 moves from the initial position 1c to the extreme position 1g, the conveying component 11 or the stacking platform 12 to move first at a first speed and then at a second speed, where the first speed is greater than the second speed.

When moving from the initial position 1c to the extreme position 1g, the conveying component 11 or the stacking platform 12 has a speed divided into two phases, i.e., moving first at a first speed, and then moving relatively slowly to the extreme position 1g at a second speed. Considering that during the folding process of the stacking area 21, the highest risk of bending and warping predominantly occurs at the initial folding stage of the stacking area 21. Therefore, in this embodiment, the first speed is controlled to be greater than the second speed, such that the conveying component 11 or the stacking platform 12 can move at a relatively high speed, and the distance of the connecting line between the conveying component 11 and the stacking platform 12 can quickly increase, and the stress relief response speed is higher.

When the conveying component 11 or the stacking platform 12 moves at the first speed and when it moves at the second speed between the initial position 1c and the extreme position 1g can be determined based on the actual folding process. For example, during the whole time period from 1/3 to 1/2, the conveying component 11 or the stacking platform 12 moves at the first speed; and in the remaining time period, it moves at the second speed, and so on. The entire time period described above refers to the time taken for the conveying component 11 or the stacking platform 12 to move from the initial position 1c to the extreme position 1g.

For ease of intuitively understanding the movement trajectory of the stacking platform 12, the value of the distance between the initial position 1c and the extreme position 1g may be assigned to 1. In this case, the specific translational displacement amplitude curve of the stacking platform 12 can refer to FIG. 10. It can be seen that on one side of the initial position 1c, the stacking platform 12 first moves at the first speed for a distance from the initial position 1c, then moves to the extreme position 1g at the second speed, and then returns to the initial position 1c at a constant speed; next, on the other side of the initial position 1c, the stacking platform 12 moves at the first speed for a distance from the initial position 1c, then moves to the extreme position 1g at the second speed, and finally returns to the initial position 1c at a constant speed. In this way, the translational strategy is completed once.

The first speed is controlled to be greater than the second speed, such that the conveying component 11 or the stacking platform 12 translates faster at the beginning of folding. This helps to quickly increase the distance of the connecting line between the conveying component 11 and the stacking platform 12, and quickly release the stress in the folding process, thereby further improving the quality of the stacked battery.

According to some embodiments of the present application, a ratio of the first speed to the second speed is denoted as β, where 1.5 ≤ β ≤ 2.5.

The ratio of the first speed to the second speed should be reasonably designed. If the first speed is not greatly different from the second speed, because the total displacement amount is unchanged, that is, the distance between the initial position 1c and the extreme position 1g is determined, if the two speeds are not greatly different, the distance of the connecting line between the conveying component 11 and the stacking platform 12 cannot quickly increase during early translation, and the response speed to stress relief is relatively slow. If the first speed differs too much from the second speed, the conveying component 11 or the stacking platform 12 needs to switch between the two speeds with a large difference, which is not conducive to the stability of control.

Therefore, the ratio of the first speed to the second speed may be controlled to be 1.5 to 2.5. For example, β may be, but is not limited to, 1.5, 1.6, 1.7, 1.8, 1.9, 2.0, 2.1, 2.2, 2.3, 2.4, 2.5, or the like.

The ratio of the first speed to the second speed is controlled to be 1.5 to 2.5, such that the response speed to stress relief in the folding process can be improved, and the folding effect can be improved; and meanwhile, the movement control on the conveying component 11 or the stacking platform 12 can also be effectively considered, such that the conveying component 11 or the stacking platform 12 moves stably when the translational strategy is executed.

According to some embodiments of the present application, β further satisfies the following condition: 1.8 ≤ β ≤ 2.2.

The ratio of the first speed to the second speed may also be controlled to be 1.8 to 2.2. For example, β may be, but is not limited to, 1.8, 1.9, 2.0, 2.1, 2.2, or the like.

In this way, the ratio of the first speed to the second speed is further controlled to be 1.8 to 2.2, such that the response speed to stress relief in the folding process is better; and meanwhile, the movement of the conveying component 11 or the stacking platform 12 can be stably controlled.

According to some embodiments of the present application, when the conveying component 11 and/or the stacking platform 12 executes the translational strategy, the displacement amount of the conveying end 113 of the conveying component 11 conveying the electrode plate group 20 is the length of at least two stacking areas 21.

After the conveying component 11 and/or the stacking platform 12 executes the translational strategy, the conveying component 11 can output two stacking areas 21, or can output three or more stacking areas 21. Specifically, in some embodiments, when the conveying component 11 and/or the stacking platform 12 executes the translational strategy, the displacement amount of the conveying end 113 of the conveying component 11 conveying the electrode plate group 20 is the length of two stacking areas 21. In addition, when the conveying component 11 or the stacking platform 12 completes one reciprocating movement on either side of the initial position 1c, the displacement amount of the conveying end 113 of the conveying component 11 conveying the electrode plate group 20 is the length of one stacking area 21.

In this way, the period of the translational strategy is associated with the conveying period of the conveying component 11, such that the folding quality of the electrode plate group 20 is more controllable, and the consistency of the product is better.

According to some embodiments of the present application, referring to FIG. 6, the step of executing the translational strategy includes: controlling, each time the reciprocating movement on either side of the initial position 1c is performed, the conveying component 11 and/or the stacking platform 12 to move by a preset displacement amount 1d in a direction away from each other.

It is considered that as the folding continues, the number of the stacking areas 21 that are folded on the stacking platform 12 increases, and the distance between the stacking platform 12 and the conveying component 11 decreases accordingly. In this way, the folding space of the stacking areas 21 is gradually reduced. Therefore, when the conveying component 11 and/or the stacking platform 12 executes the translational strategy, the conveying component 11 and/or the stacking platform 12 is controlled to move by a preset displacement amount 1d in the direction away from each other, such that the distance between the conveying component 11 and the stacking platform 12 can be increased to partially or completely compensate for the reduced space between the conveying component 11 and the stacking platform 12 due to the increased folding thickness, thereby enabling the folding process to run stably. The expression "away from each other" means that the conveying component 11 and the stacking platform 12 move away from each other.

In addition, there are various ways to control the conveying component 11 and/or the stacking platform 12 to move in the direction away from each other. For example, when the conveying component 11 and/or the stacking platform 12 reciprocates on one side of the initial position 1c, the conveying component 11 and/or the stacking platform 12 is controlled to synchronously move in the direction away from each other; or when the conveying component 11 and/or the stacking platform 12 reciprocates on one side of the initial position 1c, the conveying component 11 and/or the stacking platform 12 is controlled to move as a whole in the direction away from each other.

It should be noted that controlling the conveying component 11 and/or the stacking platform 12 to move by the preset displacement amount 1d in the direction away from each other means that: if one of the conveying component 11 and the stacking platform 12 is controlled to move in the direction away from each other, the movement amount of the conveying component 11 or the stacking platform 12 is the preset displacement amount 1d; and if both the conveying component 11 and the stacking platform 12 are controlled to move in the direction away from each other, the sum of the movement amounts of the conveying component 11 and the stacking platform 12 is the preset displacement amount 1d.

In this design, the configuration can effectively compensate for space reduction due to increased folding cycles, facilitating the folding of the electrode plate group 20. Simultaneously, it promotes the stress relief of the electrode plate group 20 during the folding process, improving the quality of the stacked battery.

According to some embodiments of the present application, referring to FIG. 6, a ratio of the preset displacement amount 1d to the thickness of the electrode plate group 20 in the stacking areas 21 is denoted as α, where 1 ≤ α ≤ 5.

The thickness of the electrode plate group 20 in the stacking areas 21 refers to the sum of the thicknesses of the first electrode plate 22, the second electrode plate 23, and the separator 24 in the stacking areas 21. The thickness of the electrode plate group 20 in the stacking areas 21 may be determined based on the actual structural design of the stacking areas 21. For example, in the stacking areas 21, the electrode plate group 20 may include a first electrode plate 22, separators 24 disposed on two opposite side surfaces of the first electrode plate 22, and a second electrode plate 23 disposed on one of the separators 24. In this case, the thickness of the electrode plate group 20 in the stacking areas 21 may be the sum of the thicknesses of the first electrode plate 22, the second electrode plate 23, and the two separators 24.

α may have a value of 1 to 5; for example, α may be, but is not limited to, 1, 1.2, 1.5, 2.0, 2.5, 3, 4, 5, or the like. When α is set to 1, the conveying component 11 or the stacking platform 12 moves by the thickness of one electrode plate group 20 in the direction away from each other. When α is set to 5, the conveying component 11 or the stacking platform 12 moves by the thicknesses of five electrode plate groups 20 in the direction away from each other.

The ratio of the preset displacement amount 1d to the thickness of the electrode plate group 20 in the stacking areas 21 is controlled to be 1 to 5, such that the conveying component 11 or the stacking platform 12 retracts by an appropriate displacement amount after folding. This leaves a proper space for the electrode plate group 20 between the conveying component 11 and the stacking platform 12, thereby implementing a stable and effective folding process.

According to some embodiments of the present application, α further satisfies the following condition: 2 ≤ α ≤ 3.

α may have a value of 2 to 3. For example, the value of α may be, but is not limited to, 2, 2.2, 2.4, 2.6, 2.8, 3, or the like.

The value of α is further controlled to be 2 to 3, such that after each folding, the space between the conveying component 11 and the stacking platform 12 is more reasonably controlled, thereby enabling the folding process of the electrode plate group 20 on the stacking platform 12 more stable.

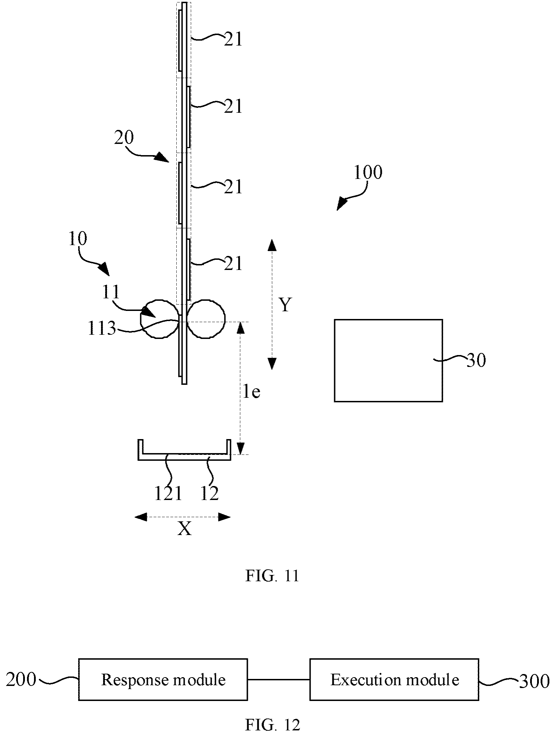

According to some embodiments of the present application, referring to FIG. 11, before the step S200 of controlling the conveying component 11 and/or the stacking platform 12 to move, the method further includes:
controlling a minimum distance between the conveying end 113 of the conveying component 11 and a working surface 121 of the stacking platform 12 to be an initial distance 1e, where a ratio of the initial distance 1e to the length of the stacking area 21 is denoted as λ, where 1.2 ≤ λ ≤ 2.

The minimum distance between the conveying end 113 and the working surface 121 is a vertical line drawn by the conveying end 113 to the working surface 121, and the length of the obtained vertical line segment is the initial distance 1e. For details, refer to the distance represented by 1e in FIG. 11.

The setting of the initial distance 1e may affect the folding effect of the electrode plate group 20 on the stacking platform 12. For example, if the initial distance 1e is less than the length of one stacking area 21, a portion of the same stacking area 21 is still located on the conveying component 11, and the other portion thereof has been folded on the stacking platform 12. As a result, it is more difficult to release stress on the stacking area 21, and zigzag folding cannot be properly executed. If the initial distance 1e is too large, two or more stacking areas 21 may be suspended between the conveying component 11 and the stacking platform 12. As a result, the situation that the folding direction is disordered easily occurs during zigzag folding; and meanwhile, the folding efficiency is also reduced.

Therefore, the ratio of the initial distance 1e to the length of the stacking area 21 is controlled to be 1.2 to 2; for example, γ may be, but is not limited to, 1.2, 1.3, 1.4, 1.5, 1.6, 1.7, 1.8, 1.9, 2, or the like.

In this design, the ratio of the initial distance 1e to the length of the stacking area 21 is controlled to be 1.2 to 2, such that a cantilevered stacking area 21 is provided between the conveying component 11 and the stacking platform 12, the folding process can be stably performed, and meanwhile, the folding efficiency is improved.

According to some embodiments of the present application, λ further satisfies the following condition: 1.3 ≤ λ ≤ 1.6.

The ratio of the initial distance 1e to the length of the stacking area 21 is controlled to be 1.3 to 1.6; for example, λ may be, but is not limited to, 1.3, 1.35, 1.4, 1.45, 1.5, 1.55, 1.6, or the like.

In this way, the ratio of the initial distance 1e to the length of the stacking area 21 is further controlled to be 1.3 to 1.6, such that the folding of the electrode plate group 20 can be more accurately controlled, thereby further improving the stability and the folding efficiency in the folding process.

According to some embodiments of the present application, in response to the step of the stacking areas 21 being folded on the stacking platform 12, the method includes: controlling the displacement amount of the conveying end 113 of the conveying component 11 conveying the electrode plate group 20 to be a third displacement, where a ratio of the third displacement to the length of the stacking area 21 is denoted as ε, where 2 ≤ ε ≤ 10.

The displacement amount of the conveying end 113 of the conveying component 11 conveying the electrode plate group 20 may also be understood as a displacement of the electrode plate group 20 moving towards the stacking platform 12 under the action of the conveying component 11. In response to the step of the stacking areas 21 being folded on the stacking platform 12, the method includes: controlling the displacement amount of the conveying end 113 of the conveying component 11 conveying the electrode plate group 20 to be the third displacement. That is, when the displacement amount of the conveying end 113 of the conveying component 11 conveying the electrode plate group 20 reaches the third displacement, the conveying component 11 and/or the stacking platform 12 is controlled to move in the preset direction X. For ease of understanding the third displacement, (a) in FIG. 6 is taken as an example for description. The third displacement may be the length of the electrode plate group 20 which is indicated by 1S in FIG. 6. For example, the third displacement may be a sum of the length of the two stacking areas 21 and the length by which one stacking area 21 protrudes from the conveying component 11 in (a) in FIG. 6.

In some embodiments, when the conveying component 11 and/or the stacking platform 12 moves from the initial position 1c to the extreme position 1g, the displacement amount of the conveying end 113 of the conveying component 11 conveying the electrode plate group 20 is controlled to be the second displacement 1b. In this case, for understanding a difference between the second displacement 1b and the third displacement, (a) and (b) in FIG. 6 can be taken as references. When the movement amount of the electrode plate group 20 reaches the third displacement, the stacking platform 12 is controlled to move rightward. When the electrode plate group moves to the extreme position 1g, the movement amount corresponding to the electrode plate group 20 is the second displacement 1b.

On the premise that the initial distance 1e is controlled to be 1.2 to 2, the displacement amount of the conveying end 113 of the conveying component 11 conveying the electrode plate group 20 is controlled to be 2 to 10, such that at least one stacking area 21 has been folded or starts to be folded on the stacking platform 12. For example, ε may be, but is not limited to, 2, 3, 4, 5, 6, 7, 8, 9, 10, or the like.

In this design, the displacement amount of the conveying end 113 of the conveying component 11 conveying the electrode plate group 20 is controlled to be 2 to 10, such that at least one stacking area 21 has been folded on the stacking platform 12. This facilitates stress relief of the stacking areas 21 during the folding, reduces the bending and warping at the folding position 25, and improves the quality of the stacked battery.

According to some embodiments of the present application, ε further satisfies the following condition: 2.1 ≤ ε ≤ 2.9.

On the premise that the initial distance 1e is controlled to be 1.2 to 2, the displacement amount of the conveying end 113 of the conveying component 11 conveying the electrode plate group 20 is controlled to be 2.1 to 2.9, such that the folding cycles of the stacking areas 21 on the stacking platform 12 are reduced before the translational strategy is executed.

The displacement amount ε of the conveying end 113 of the conveying component 11 conveying the electrode plate group 20 may be controlled to be 2.1 to 2.9. For example, ε may be, but is not limited to, 2.1, 2.2, 2.3, 2.4, 2.5, 2.6, 2.7, 2.8, 2.9, or the like.

The displacement amount of the conveying end 113 of the conveying component 11 conveying the electrode plate group 20 is further controlled to be 2.1 to 2.9, such that the folding cycles of the stacking areas 21 on the stacking platform 12 are reduced before the translational strategy is executed. Therefore, most of the folding processes of the electrode plate group 20 can benefit from the translational strategy, thereby further improving the quality of the stacked battery.

According to some embodiments of the present application, referring to FIG. 12, the present application provides an electrode plate folding control apparatus, adopting the electrode plate folding control method according to any one of the above embodiments, where the electrode plate folding control apparatus includes a response module 200 and an execution module 300. The response module 200 is configured to acquire a situation of the stacking areas 21 being folded on the stacking platform 12, and feed back a signal. The execution module 300 is configured to control the conveying component 11 to operate and control, according to the signal fed back by the response module 200, the conveying component 11 and/or the stacking platform 12 to reciprocate in the preset direction X, where the preset direction X intersects with the direction Y in which the conveying component 11 is spaced from the stacking platform 12.

The response module 200 refers to a device that can acquire the execution timing of movement of the conveying component 11 or the stacking platform 12. For example, the response module 200 may be selected as a displacement sensing module to acquire the conveying displacement of the electrode plate group 20 by the conveying component 11. For example, if the acquired conveying displacement is 2.1 to 2.9, a signal is fed back to the execution module 300; alternatively, the response module 200 may be a vision module, such as a CCD, and when folding action information on the stacking platform 12 is acquired, a signal is fed back to the execution module 300.

The execution module 300 refers to a device that can control the operation of the conveying component 11 and control the movement of the conveying component 11 or the stacking platform 12; for example, it may be a single-chip microcomputer, an electronic control unit, or the like.

The above electrode plate folding control apparatus adopts the above electrode plate folding control method, and uses the response module 200 to provide the determination timing for the execution module 300 to control the movement of the conveying component 11 or the stacking platform 12. In this way, a clearance space can be provided for folding of the stacking area 21, thereby facilitating stress relief of the stacking area during folding, reducing a pulling force of the stacking area 21 in a folded state on a stacking area 21 that is unfolded, and reducing the degree of bending and warping of the stacking area 21 at a folding position 25. Thus, the probability of abnormal gaps 1f being generated at the folding position 25 of a stacked structure is reduced, thereby effectively reducing the probability of lithium plating of the electrode plate at the folding position 25, and improving the quality of the stacked battery.

According to some embodiments of the present application, the present application provides an electrode plate folding apparatus 100, where the electrode plate folding apparatus 100 includes: an electrode plate folding mechanism 10 and a driving mechanism 30, where the electrode plate folding mechanism 10 includes a stacking platform 12 and a conveying component 11 configured to convey an electrode plate group 20 and fold the electrode plate group 20 back and forth on the stacking platform 12. The driving mechanism 30 is configured to drive the conveying component 11 and/or the stacking platform 12 to reciprocate in a preset direction X, where the preset direction X intersects with a direction Y in which the conveying component 11 is spaced from the stacking platform 12.

The electrode plate folding mechanism 10 refers to a device that can fold the electrode plate group 20 back and forth on the stacking platform 12 in a zigzag configuration. The electrode plate group 20 refers to a combined structure formed by stacking a first electrode plate 22, a separator 24, and a second electrode plate 23. To ensure that the electrode plate group 20 can be continuously folded back and forth in a zigzag configuration to form a stacked structure, the electrode plate group 20 is provided with a plurality of continuous and foldable stacking areas 21 along the length direction thereof, and a fold line is present between two adjacent stacking areas 21. The fold line may be disposed on one side surface of the electrode plate group 20, or may be disposed on two opposite side surfaces of the electrode plate group 20, that is, double-sided fold lines.

The conveying component 11 refers to a device that provides conveying power for the electrode plate group 20, and may be of a roller structure. For example, the conveying component 11 may include a first roller 111 and a second roller 112 that cooperate with each other, and the electrode plate group 20 is clamped between the first roller 111 and the second roller 112. In this case, the conveying end 113 of the conveying component 11 that acts on the electrode plate group 20 may be understood as the end of the first roller 111 or the second roller 112 in contact with the electrode plate group 20. Certainly, in some embodiments, for the determination of the conveying end 113 of the conveying component 11, the intersection point between the line connecting the centers of the first roller 111 and the second roller 112 and the first roller 111 or the second roller 112 may also be considered as the conveying end 113 of the conveying component 11. One of the first roller 111 and the second roller 112 may be a driving roller, and the other may be a driven roller. Certainly, both the first roller 111 and the second roller 112 may be driving rollers.

The stacking platform 12 refers to a structure configured to hold the stacked structure and provide a supporting force for the folding process. For example, in the folding process, the conveying component 11 moves the electrode plate group 20 towards the stacking platform 12, such that one end of the stacking area 21 is in contact with the working surface 121 of the stacking platform 12. As the conveying continues, one end of the stacking area 21 is gradually bent and attached to the working surface 121 by using a contact point on the working surface 121 as a folding start point 26.

The driving mechanism 30 refers to a device that supplies power for the movement of the conveying component 11 or the stacking platform 12; for example, it may be, but is not limited to, an air cylinder, a hydraulic cylinder, an electric cylinder, or the like. Certainly, the driving mechanism 30 may also be a combination structure of an electric motor and a transmission mechanism, such as a combination of an electric motor and a lead screw mechanism, or a combination of an electric motor and a gear and rack.

In addition, it should be noted that the electrode plate folding apparatus 100 in the present application may also adopt the electrode plate folding control method according to any one of the above embodiments.

In the above electrode plate folding apparatus 100, in the folding process of the electrode plate group 20, the conveying component 11 drives the electrode plate group 20 to move towards the stacking platform 12. When the stacking area 21 starts to be folded or has been already folded on the stacking platform 12, at least one of the conveying component 11 and the stacking platform 12 is driven to move by the driving mechanism 30, such that the distance of the connecting line between the conveying end 113 of the conveying component 11 and the folding start point 26 of the stacking platform 12 can increase. In this way, a clearance space can be provided for folding of the stacking area 21, thereby facilitating stress relief of the stacking area during folding, reducing a pulling force of the stacking area 21 in a folded state on a stacking area 21 that is unfolded, and reducing the degree of bending and warping of the stacking area 21 at a folding position 25. Thus, the probability of abnormal gaps 1f being generated at the folding position 25 of a stacked structure is reduced, thereby effectively reducing the probability of lithium plating of the electrode plate at the folding position 25, and improving the quality of the stacked battery.

According to some embodiments of the present application, the present application provides a battery production system. The battery production system includes the electrode plate folding apparatus 100 as described above.

According to some embodiments of the present application, referring to FIG. 1 to FIG. 12, the present application provides an electrode plate folding control method. In the folding process, an electrode plate group 20 starts to be transported to two rollers. In this case, the stacking platform 12 does not move, and the two rollers continuously rotate relative to each other to transport the electrode plate group 20 downward. The initial distance 1e between the two rollers and the stacking platform 12 is about 1.2 to 2 stacking areas 21 in length. After the two rollers convey 2.1 to 2.9 stacking areas 21 in length downward, the stacking platform 12 starts to move leftward or rightward at the same time, such that the distance between the two rollers and the stacking platform 12 increases and thus a clearance space is generated. This alleviates bending of the electrode plate at an outlet of the two rollers and reduces the pulling force at a corner. Subsequently, after the two rollers continue to convey 0.3 to 0.7 of the stacking areas 21 in length, the stacking platform 12 moves to a left/right stop point (the first displacement 1a is the length of 0 to 0.7 of the stacking areas 21). Then, the stacking platform 12 starts to reset and returns to the initial position 1c. Then, the stacking platform 12 moves in another direction, and similarly returns to the initial position 1c again (the stacking platform 12 moves leftward/rightward for one cycle, which exactly corresponds to the length of two stacking areas 21 conveyed by the two rollers). After one cycle of movement, the stacking platform 12 starts to move downward until the stacking is completed. It should be noted that each time the stacking platform 12 completes one movement cycle, it synchronously moves downward by the thickness of about 1 to 5 stacking areas 21 of the electrode plate group 20.

The technical features of the examples described above may be combined in any manner. For brevity, not all possible combinations of the technical features in the above examples are described. However, as long as no contradiction exists in the combinations of the technical features, such combinations should be considered to be within the scope of the specification.

The aforementioned examples merely illustrate several embodiments of the present application, which are described in a specific and detailed manner, but should not be construed as limiting the patent scope of the present application. It should be noted that various changes and modifications can be made by those skilled in the art without departing from the concept of the present application, and these changes and modifications all shall fall within the protection scope of the present application. Therefore, the scope of protection of the patent in the present application shall be subjected to the appended claims.

## Claims

1. An electrode plate folding control method, an electrode plate folding mechanism (10) comprising a stacking platform (12) and a conveying component (11) configured to convey an electrode plate group (20), wherein the electrode plate group (20) is provided with a plurality of stacking areas (21) along a length direction thereof;
the electrode plate folding control method comprises the following steps:
controlling the conveying component (11) to drive the electrode plate group (20) to be conveyed towards the stacking platform (12); and
controlling, in response to the stacking areas (21) being folded on the stacking platform (12), the conveying component (11) and/or the stacking platform (12) to move in a preset direction (X), such that a distance of a connecting line between a conveying end (113) of the conveying component (11) that acts on the electrode plate group (20) and a folding start point (26) of the stacking area (21) on the stacking platform (12) increases, wherein the preset direction (X) intersects with a direction (Y) in which the conveying component (11) is spaced from the stacking platform (12).

2. The electrode plate folding control method according to claim 1, wherein the step of controlling the conveying component (11) and/or the stacking platform (12) to move in the preset direction (X) comprises:
controlling the conveying component (11) and/or the stacking platform (12) to continuously and periodically execute a translational strategy in the preset direction (X), wherein the translational strategy comprises reciprocating on one side of an initial position (1c) of the conveying component (11) or the stacking platform (12) along the preset direction (X), and reciprocating on the other side of the initial position (1c) along the preset direction (X).

3. The electrode plate folding control method according to claim 2, wherein the step of executing the translational strategy comprises:
controlling the stacking platform (12) to reciprocate on a second side of the initial position (1c) in a case that the stacking area (21) is folded along a first side facing the initial position (1c); and
controlling the stacking platform (12) to reciprocate on the first side in a case that the stacking area (21) is folded along the second side, wherein the first side and the second side are separately two opposite sides of the initial position (1c) along the preset direction (X).

4. The electrode plate folding control method according to claim 2, wherein the step of executing the translational strategy comprises:
controlling, in a case that the stacking area (21) is folded along a first side facing the initial position (1c), the conveying component (11) to reciprocate on the first side; and
controlling, in a case that the stacking area (21) is folded along a second side facing the initial position (1c), the conveying component (11) to reciprocate on the second side, wherein the first side and the second side are separately two opposite sides of the initial position (1c) along the preset direction (X).

5. The electrode plate folding control method according to any one of claims 2 to 4, wherein positions through which the conveying component (11) or the stacking platform (12) reciprocates on either side of the initial position (1c) comprise the initial position (1c) and an extreme position (1g), and the extreme position (1g) is spaced from the initial position (1c) in the preset direction (X).

6. The electrode plate folding control method according to claim 5, wherein a distance between the extreme position (1g) and the initial position (1c) is denoted as a first displacement (1a), and a ratio of the first displacement (la) to a length of the stacking area (21) is denoted as η, wherein in a case that one of the conveying component (11) and the stacking platform (12) is controlled to execute the translational strategy, 0 < η ≤ 0.7.

7. The electrode plate folding control method according to claim 6, wherein η further satisfies the following condition: 0.4 ≤ η ≤ 0.5.

8. The electrode plate folding control method according to any one of claims 5 to 7, wherein in a case that the conveying component (11) and/or the stacking platform (12) moves from the initial position (1c) to the extreme position (1g), a displacement amount of the conveying end (113) of the conveying component (11) conveying the electrode plate group (20) is controlled to be a second displacement (1b), and a ratio of the second displacement (1b) to the length of the stacking area (21) is denoted as y, wherein 0.3 ≤ γ ≤ 0.7.

9. The electrode plate folding control method according to claim 8, wherein γ further satisfies the following condition: 0.3 ≤ γ ≤ 0.4.

10. The electrode plate folding control method according to any one of claims 5 to 9, wherein the step of executing the translational strategy comprises:
controlling, in a case that the conveying component (11) or the stacking platform (12) moves from the initial position (1c) to the extreme position (1g), the conveying component (11) or the stacking platform (12) to move first at a first speed and then at a second speed, wherein the first speed is greater than the second speed.

11. The electrode plate folding control method according to claim 10, wherein a ratio of the first speed to the second speed is denoted as β, wherein 1.5 ≤ β ≤ 2.5.

12. The electrode plate folding control method according to claim 11, wherein β further satisfies the following condition: 1.8 ≤ β ≤ 2.2.

13. The electrode plate folding control method according to any one of claims 2 to 12, wherein after the conveying component (11) and/or the stacking platform (12) executes the translational strategy, the displacement amount of the conveying end (113) of the conveying component (11) conveying the electrode plate group (20) is a length of at least two stacking areas (21).

14. The electrode plate folding control method according to any one of claims 2 to 13, wherein the step of executing the translational strategy comprises:
controlling, each time the reciprocating movement on either side of the initial position (1c) is performed, the conveying component (11) and/or the stacking platform (12) to move by a preset displacement amount (1d) in a direction away from each other.

15. The electrode plate folding control method according to claim 14, wherein a ratio of the preset displacement amount (1d) to a thickness of the electrode plate group (20) in the stacking areas (21) is denoted as α, wherein 1 ≤ α ≤ 5.

16. The electrode plate folding control method according to claim 15, wherein α further satisfies the following condition: 2 ≤ α ≤ 3.

17. The electrode plate folding control method according to any one of claims 1 to 16, wherein before the step of controlling the conveying component (11) and/or the stacking platform (12) to move in the preset direction (X), the method further comprises:
controlling a minimum distance between the conveying end (113) of the conveying component (11) and a working surface (121) of the stacking platform (12) to be an initial distance (1e), wherein a ratio of the initial distance (1e) to the length of the stacking area (21) is denoted as λ, wherein 1.2 ≤ λ ≤ 2.

18. The electrode plate folding control method according to claim 17, wherein λ further satisfies the following condition: 1.3 ≤ λ ≤ 1.6.

19. The electrode plate folding control method according to claim 17 or 18, wherein in response to the step of the stacking areas (21) being folded on the stacking platform (12), the method comprises:
controlling the displacement amount of the conveying end (113) of the conveying component (11) conveying the electrode plate group (20) to be a third displacement, wherein a ratio of the third displacement to the length of the stacking area (21) is denoted as ε, wherein 2 ≤ ε ≤ 10.

20. The electrode plate folding control method according to claim 19, wherein ε further satisfies the following condition: 2.1 ≤ ε ≤ 2.9.

21. An electrode plate folding control apparatus, adopting the electrode plate folding control method according to any one of claims 1 to 20, wherein the electrode plate folding control apparatus comprises:
a response module (200), configured to acquire a situation of the stacking areas (21) being folded on the stacking platform (12), and feed back a signal; and
an execution module (300), configured to control the conveying component (11) to operate and control, according to the signal fed back by the response module (200), the conveying component (11) and/or the stacking platform (12) to reciprocate in the preset direction (X), wherein the preset direction (X) intersects with the direction (Y) in which the conveying component (11) is spaced from the stacking platform (12).

22. An electrode plate folding apparatus, wherein the electrode plate folding apparatus comprises:
an electrode plate folding mechanism (10), comprising a stacking platform (12) and a conveying component (11) configured to convey an electrode plate group (20) and fold the electrode plate group (20) back and forth on the stacking platform (12); and
a driving mechanism (30), configured to drive the conveying component (11) and/or the stacking platform (12) to reciprocate in a preset direction (X), wherein the preset direction (X) intersects with a direction (Y) in which the conveying component (11) is spaced from the stacking platform (12).

23. A battery production system, comprising the electrode plate folding apparatus according to claim 22.
